# EUROPÄISCHE PATENTANMELDUNG

(11) **EP 4 050 227 A1**
(43) Veröffentlichungstag der Anmeldung: **31.08.2022**
(21) Anmeldenummer: 21158968.4
(22) Anmeldetag: 24.02.2021
(51) Int. Cl.: F16C 17/02, F16C 33/10, F16C 33/14

(54) **GLEITLAGER, GETRIEBE, WINDKRAFTANLAGE UND HERSTELLUNGSVERFAHREN**

(71) Anmelder: Flender GmbH, 46395 Bocholt (DE)
(72) Erfinder: Meyer, Thomas, 52223 Stolberg (DE)
(74) Vertreter: Michalski Hüttermann & Partner Patentanwälte mbB

(57) **Zusammenfassung**

Gleitlager (1), welches einen kupferhaltigen Werkstoff, insbesondere Zinnbronze CuSn₁₂Ni₂, aufweist, wobei dass das Gleitlager zumindest an seiner Lauffläche (2) einen Festschmierstoff aufweist.

Weiterhin betrifft die Erfindung ein Getriebe aufweisend ein derartiges Gleitlager (1), eine Windkraftanlage aufweisend ein derartiges Gleitlager (1) und/oder ein derartiges Getriebe und ein Verfahren zur Herstellung eines derartigen Gleitlagers (1).

## Beschreibung

Die Erfindung betrifft ein Gleitlager, welches einen kupferhaltigen Werkstoff, insbesondere Zinnbronze CuSn₁₂Ni₂, aufweist. Weiterhin betrifft die Erfindung ein Getriebe für eine Windkraftanlage aufweisend ein derartiges Gleitlager, eine Windkraftanlage aufweisend ein derartiges Gleitlager und/oder ein derartiges Getriebe und ein Verfahren zur Herstellung eines derartigen Gleitlagers.

Gleitlager sind neben Wälzlagern die im Maschinen- und Gerätebau am häufigsten gebrauchte Lagerbauart. Im Gleitlager haben die beiden sich relativ zueinander bewegenden Teile direkten Kontakt. Sie gleiten aufeinander gegen den durch Gleitreibung verursachten Widerstand. Viele Gleitlager und deren Anwendungen sind bekannt.

Auch bei Windenergieanlagen bzw. Windkraftanlagen werden Gleitlager zur Lagerung von Wellen in einem Getriebe der Windkraftanlage eingesetzt, bspw. im Windkrafthauptgetriebe, welches die relativ niedrige Drehzahl des Rotors der Windkraftanlage in die für den elektrischen Generator notwendige höhere Drehzahl umwandelt. Viele bekannte Gleitlager und dafür verwendete Werkstoffe, wie zum Beispiel die oftmals für Schneckenradgetriebe verwendete Zinnbronze CuSn₁₂Ni₂, zeichnen sich durch eine sehr hohe Verschleißfestigkeit aus. Allerdings besitzen harte Gleitlagerwerkstoffe wie Zinn- und Aluminiumbronzen nur geringe Notlaufeigenschaften im Gegensatz zu Zinn-Lagermetallen bzw. Weißmetallen.

Die kombinierten Eigenschaften von hoher Verschleißfestigkeit und sehr guten Notlaufeigenschaften werden jedoch insbesondere für die Anwendung in Windenergieanlagen für das Trudeln der Anlage sowie Betriebssituationen mit hohem Mischreibungsanteil benötigt, um Verschleißfreiheit zu garantieren und bei Mangelschmierung nicht zu versagen in Bezug auf einen Lagerfresser. Beispielsweise ist die Notlaufeigenschaft des Werkstoffs CuSn₁₂Ni₂ beim Ausfall der Schmieranlage unter Umständen nicht ausreichend. Die Schmierung kann jedoch ausfallen, wenn eine Windenergieanlage keinen Netzanschluss hat, bspw. während des Aufbaus oder wegen einer gezielten Abtrennung der Windenergieanlage vom elektrischen Netz. In solchen Fällen fällt auch eine Ölförderung in die Gleitlager aus, sodass die Gleitlager oftmals nicht mehr ausreichend geschmiert werden.

Das Problem wurde bisher dadurch gelöst, dass man sich auf die Zuverlässigkeit der Ölschmieranlage verlassen hat. Demnach ist der sichere Betrieb der Gleitlager direkt von der Zuverlässigkeit der Ölschmieranlage abhängig.

Eine Aufgabe der Erfindung ist es, ein verbessertes Gleitlager bzw. ein entsprechendes Getriebe, eine entsprechende Windkraftanlage bzw. ein entsprechendes Herstellungsverfahren bereitzustellen, welches bzw. welche insbesondere die genannten Nachteile überwindet.

Eine Lösung der Aufgabe ergibt sich durch ein Gleitlager der eingangs genannten Art dadurch, dass das Gleitlager zumindest an seiner Lauffläche einen Festschmierstoff aufweist.

Weiterhin ergibt sich eine Lösung der Aufgabe durch ein Getriebe der eingangs genannten Art dadurch, dass das Getriebe das vorgeschlagene Gleitlager aufweist.

Ferner ergibt sich eine Lösung der Aufgabe durch eine Windkraftanlage der eingangs genannten Art dadurch, dass die Windkraftanlage das vorgeschlagene Gleitlager und/oder das vorgeschlagene Getriebe aufweist.

Schließlich ergibt sich eine Lösung der Aufgabe durch ein Verfahren zur Herstellung des vorgeschlagenen Gleitlagers umfassend die Verfahrensschritte:
- Bereitstellen eines kupferhaltigen Werkstoffs, insbesondere Zinnbronze CuSn₁₂Ni₂,
- Bereitstellen eines Festschmierstoffs und
- Ausformen des Gleitlagers aufweisend den kupferhaltigen Werkstoff und den Festschmierstoff derart, dass das Gleitlager zumindest an seiner Lauffläche den Festschmierstoff aufweist.

Der kupferhaltige Werkstoff, insbesondere die Zinnbronze CuSn₁₂Ni₂, verfügt über eine vergleichsweise große Härte, insbesondere die Zinnbronze CuSn₁₂Ni₂ dank ihres Nickelgehalts. Durch die große Härte hat das Gleitlager eine vergleichsweise große Verschleißfestigkeit. Dank des Festschmierstoffs werden die Selbstschmierfähigkeit und somit auch die Notlaufeigenschaften des Gleitlagers erheblich verbessert.

Bei einer vorteilhaften Ausgestaltung der Erfindung ist der Festschmierstoff an einem Großteil der Lauffläche des Gleitlagers angeordnet.

Die Anordnung des Festschmierstoffs an einem Großteil der Lauffläche des Gleitlagers bedeutet bspw., dass der Festschmierstoff nicht nur punktuell, sondern flächig an der Lauffläche angeordnet ist und dadurch ein Großteil der Lauffläche abdeckt. Insbesondere kann der Festschmierstoff mehr oder weniger homogen in den kupferhaltigen Werkstoff eingebracht sein, sodass das Gleitlager den Festschmierstoff auch an einem Großteil der Lauffläche aufweist. Alternativ oder zusätzlich kann das Gleitlager zumindest im Bereich der Lauffläche mit dem Festschmierstoff beschichtet sein.

Bei einer weiteren vorteilhaften Ausgestaltung der Erfindung ist der Festschmierstoff überwiegend an den Korngrenzen des metallischen Gefüges des Gleitlagers bzw. einer Lagerbuchse des Gleitlagers angeordnet.

Je nach Ausgestaltung des Gleitlagers kann das Gleitlager einstückig ausgebildet sein, sodass die zu lagernden Welle durch das massive Gleitlager gelagert wird und auf einer Lauffläche des massiven Gleitlagers aufliegt bzw. läuft. Das Gleitlager kann jedoch auch zwei- oder mehrstückig ausgebildet sein und bspw. eine Lagerbuchse aufweisen, die wiederum die Lauffläche aufweist. Dabei kann die Lagerbuchse durch das übrige Gleitlager gehalten werden.

Der Festschmierstoff ist dabei derart in bzw. an den sonstigen kupferhaltigen Werkstoff des Gleitlagers eingebracht, dass sich der Festschmierstoff überwiegend an den Korngrenzen des metallischen Gefüges anlagert. Somit kann der Festschmierstoff in Form von schmierfähigen Einlagerungen an den Korngrenzen vorliegen, wodurch die Notlaufeigenschaften des Gleitlagers erheblich verbessert werden können. Besonders gute Ergebnisse lassen sich mit kupferhaltigen Werkstoffen erzielen, die eine hohe Feinkörnigkeit aufweisen, da das entsprechende metallische Gefüge lediglich kleine Körner aufweist und somit besonders fein verteilte, schmierfähigen Einlagerungen des Festschmierstoffs vorliegen.

Bei einer weiteren vorteilhaften Ausgestaltung der Erfindung ist der Festschmierstoff mittels Beschichtung, insb. mittels Auftragsschweißens, zumindest an der Lauffläche des Gleitlagers angebracht.

Der Festschmierstoff kann bspw. mittels thermischen Spritzens, mittels Schutzgas-Schweißens, aber auch mittels 3D-Drucks bzw. additiver Fertigung oder auch mittels Auftragsschweißens, insb. Laser-Auftragsschweißens, an bzw. auf der Lauffläche des Gleitlagers an- bzw. aufgebracht werden. Dabei kann das Gleitlager vor dem Beschichten bereits Festschmierstoff aufweisen oder noch frei von Festschmierstoff sein. Hierzu kann der Festschmierstoff bspw. als Pulver zur Verfügung gestellt werden, welches dann mittels Beschichtung, insbesondere einem der genannten Beschichtungsverfahren, an bzw. auf der Lauffläche des Gleitlagers an- bzw. aufgebracht wird.

Beim Laser-Auftragsschweißen kann eine vergleichsweise hohe Auftragsrate mit einer Laserleistung von bis zu 8 kW, teils auch bis zu 15 kW, erreicht werden. Der Festschmierstoff kann auch mittels 3-D Druck auf das übrige Gleitlager, bzw. die übrige Lagerbuchse aufgebracht werden, insbesondere zumindest an der Lauffläche, wobei hierbei Laserleistungen von bis zu 1,2 kW, teils bis zu 2 kW, eingesetzt werden können.

Bei einer weiteren vorteilhaften Ausgestaltung der Erfindung ist das Gleitlager und/oder eine Lagerbuchse des Gleitlagers mittels Gusses hergestellt, wobei der Festschmierstoff der Schmelze zugegeben ist.

Je nach Ausgestaltung kann das Gleitlager bzw. die Lagerbuchse mittels Gusses hergestellt sein, wobei hierzu bspw. Standguss, Schleuderguss oder Strangguss zum Einsatz kommen können. Der Festschmierstoff wird dabei der zu gießenden Schmelze hinzugegeben, wobei der Festschmierstoff bspw. als Pulver zugegeben werden kann. Vorzugsweise ordnet sich der Festschmierstoff während des Erstarrens der Schmelze gut an den Korngrenzen des metallischen Gefüges des Gleitlagers bzw. der Lagerbuchse an, wodurch sich der Festschmierstoff auch an der Oberfläche des Gleitlagers bzw. der Lagerbuchse anordnet und damit auch an der Lauffläche des Gleitlagers.

Bei einer weiteren vorteilhaften Ausgestaltung der Erfindung weist das Gleitlager und/oder eine Lagerbuchse des Gleitlagers einen Nickelgehalt von 0,5% bis 5% und/oder einen Zinngehalt von 8% bis 14% auf.

Insbesondere durch den Nickelgehalt von 0,5 % bis 5 % erhält man ein Gleitlager bzw. eine Lagerbuchse, welches bzw. welche eine besonders große mechanische Stabilität und Härte aufweist. Die genannte Zusammensetzung des Werkstoffs des Gleitlagers bzw. der Lagerbuchse bewirkt eine hohen Verschleißfestigkeit des Gleitlagers.

Bei einer weiteren vorteilhaften Ausgestaltung der Erfindung weist der Festschmierstoff Grafit, Molybdän, Wolframdisulfid, Gleitlack, eine Keramik, hexagonales Bornitrid (hBN), Polytetrafluorethylen (PTFE), Polyamid (PA), Polyoxymethylen (POM) und/oder Polyetheretherketone (PEEK) auf.

Der Festschmierstoff kann dabei eines, zwei oder auch mehr der genannten Materialien aufweisen.

Wenn der Festschmierstoff Grafit aufweist, wird vorzugsweise so viel Grafit verwendet, dass der Werkstoff des Gleitlagers, insbesondere zumindest an der Lauffläche, einen Grafitgehalt von 0,1% bis 5% aufweist. Wenn der Festschmierstoff Molybdän aufweist, wird vorzugsweise so viel Molybdän verwendet, dass der Werkstoff des Gleitlagers, insbesondere zumindest an der Lauffläche, einen Molybdängehalt von 0,2% bis 5% aufweist.

Bspw. kann der Werkstoff des Gleitlagers bzw. der Lagerbuchse mittels Laserauftragsschweißens beschichtet werden. Beim Laserauftragsschweißen wird der insbesondere metallische Werkstoff als Pulver dem Laserstrahl zugeführt, insb. zwecks Aufschmelzens. Das Pulver kann auf einfache Weise z.B. mit Grafit-Pulver versetzt sein. Der Vorteil des Pulvers und des Laserauftragsschweißens ist dabei eine sehr gute Homogenität der Mischung. Die Kombination des Pulver-Festschmierstoffs mit dem Laserauftragsschweißen führt zu einer guten Feinkörnigkeit und damit zu einem hohen Anteil des Festschmierstoffs an den Korngrenzen, die sich an der Gleitoberfläche bzw. Lauffläche befinden. Somit liegt viel Festschmierstoff an der Gleitlageroberfläche bzw. Lauffläche zur Selbstschmierung vor.

Beispielsweise kann der Festschmierstoff auf das Gleitlager bzw. die Lagerbuchse, insbesondere auf die Lauffläche, aufgespritzt werden. Bei einigen Beispielen ist der Festschmierstoff dabei ein Gleitlack.

Besonders gute Notlaufeigenschaften lassen sich erzielen, wenn der Festschmierstoff Keramik aufweist.

Der jeweilige Festschmierstoff kann während der Herstellung des Gleitlagers bzw. der Lagerbuchse insbesondere in Pulverform verarbeitet werden, bspw. auch während des oben erläuterten Gusses oder Laserauftragsschweißens.

Bei einer weiteren vorteilhaften Ausgestaltung der Erfindung weist der Festschmierstoff dabei eine Keramik auf, die während der Herstellung des Gleitlagers bzw. einer Lagerbuchse des Gleitlagers als Keramikpulver verarbeitet wurde.

Wenn der Festschmierstoff eine Keramik, insbesondere ein Keramikpulver, aufweist, wird der Festschmierstoff vor bzw. während des Gusses nicht mitgeschmolzen, sondern bleibt fest. Dadurch kann sich der Festschmierstoff besonders gut an den Korngrenzen des metallischen Gefüges des Gleitlagers bzw. der Lagerbuchse anordnen, wodurch sich der Festschmierstoff auch an der Oberfläche des Gleitlagers bzw. der Lagerbuchse anordnet und damit auch an der Lauffläche des Gleitlagers.

Bei einer weiteren vorteilhaften Ausgestaltung der Erfindung weist der Festschmierstoff kein Blei auf.

Aufgrund der Toxizität von Blei ist der Verzicht auf Blei als Festschmierstoff bzw. Bestandteil des Festschmierstoffs vorteilhaft, um gesundheitliche Beeinträchtigungen bzw. Umweltverschmutzungen zu vermeiden. Insbesondere durch die oben angegebenen Festschmierstoffe lassen sich gute Notlaufeigenschaften des Gleitlagers erzielen.

Die vorgeschlagene Windkraftanlage weist insbesondere einen Turm und eine Gondel auf, in welcher eine elektrische Maschine, insbesondere ein elektrischer Generator, und das vorgeschlagene Getriebe untergebracht ist, wobei eine Welle des Getriebes mit einem Rotor der elektrischen Maschine verbunden ist. Weiterhin weist die Windkraftanlage insbesondere drei Propellerblätter auf, welche drehfest mit einer Welle des Getriebes verbunden sind.

Im Folgenden wird die Erfindung anhand der in den Figuren dargestellten Ausführungsbeispiele näher beschrieben und erläutert. Es zeigen:
- FIG 1-2: ein erstes und zweites Ausführungsbeispiel des vorgeschlagenen Gleitlagers,
- FIG 3: ein Ausführungsbeispiel des vorgeschlagenen Getriebes,
- FIG 4: ein Ausführungsbeispiel der vorgeschlagenen Windkraftanlage und
- FIG 5: ein Ablaufdiagramm eines Ausführungsbeispiels des vorgeschlagenen Verfahrens.

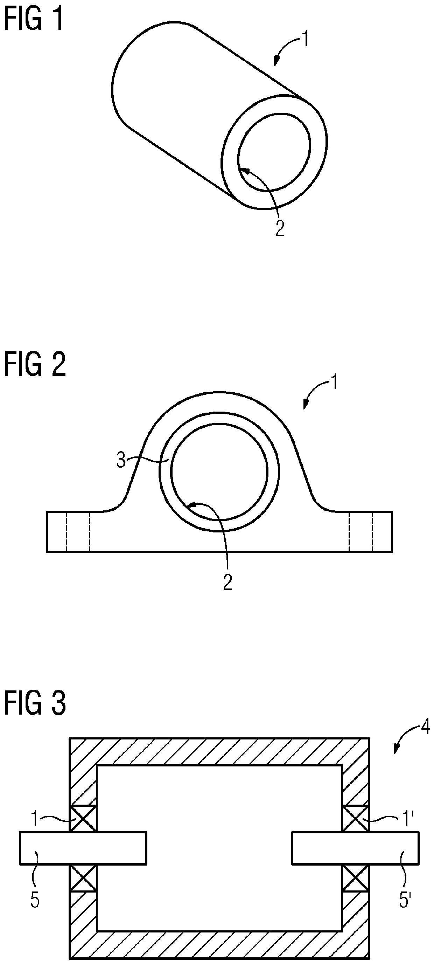

Die Figur 1 zeigt ein erstes Ausführungsbeispiel des vorgeschlagenen Gleitlagers 1, wobei eine perspektivische Ansicht dargestellt ist.

Das Gleitlager 1 weist einen kupferhaltigen Werkstoff, insbesondere Zinnbronze CuSn12Ni2, auf. Das Gleitlager 1 weist dabei an seiner Innenseite eine Lauffläche 2 auf. An der Lauffläche 2 weist das Gleitlager 1 einen Festschmierstoff auf.

Vorzugsweise ist der Festschmierstoff dabei an einem Großteil der Lauffläche 2 des Gleitlagers 1 angeordnet. Insbesondere kann der Festschmierstoff überwiegend an den Korngrenzen des metallischen Gefüges des Gleitlagers 1 bzw. einer in Figur 2 dargestellten Lagerbuchse 3 des Gleitlagers 1 angeordnet sein. Bei manchen Ausgestaltungen ist der Festschmierstoff mittels Beschichtung, insb. mittels Auftragsschweißens, zumindest an der Lauffläche 2 des Gleitlagers 1 angebracht. Das Gleitlager 1 und/oder die Lagerbuchse 3 des Gleitlagers 1 kann auch mittels Gusses hergestellt sein und der Festschmierstoff der Schmelze zugegeben sein. Vorzugsweise weist das Gleitlager 1 und/oder eine Lagerbuchse 3 des Gleitlagers 1 einen Nickelgehalt von 0,5% bis 5% und/oder einen Zinngehalt von 8% bis 14% auf. Insbesondere weist der Festschmierstoff Grafit, Molybdän, Wolframdisulfid, Gleitlack, eine Keramik, hexagonales Bornitrid (hBN), Polytetrafluorethylen (PTFE), Polyamid (PA), Polyoxymethylen (POM) und/oder Polyetheretherketone (PEEK) auf. Beispielsweise weist der Festschmierstoff eine Keramik auf, die während der Herstellung des Gleitlagers 1 bzw. einer Lagerbuchse 3 des Gleitlagers 1 als Keramikpulver verarbeitet wurde. Vorzugsweise weist der Festschmierstoff kein Blei auf.

Die Figur 2 zeigt ein zweites Ausführungsbeispiel des vorgeschlagenen Gleitlagers 1, wobei ein Querschnitt durch das Gleitlager 1 dargestellt ist. Gleiche Bezugszeichen wie in Figur 1 bezeichnen dabei gleiche Gegenstände.

Das Gleitlager 1 weist eine Lagerbuchse 3 auf, die von dem übrigen Gleitlager gehalten wird. Dabei ist die Lauffläche 2 an der Innenseite der Lagerbuchse 3 angeordnet.

Das Gleitlager 1 weist einen kupferhaltigen Werkstoff, insbesondere Zinnbronze CuSn12Ni2, auf. Weiterhin weist das Gleitlager 1 an seiner Lauffläche 2 ein Festschmierstoff auf.

Die Figur 3 zeigt ein Ausführungsbeispiel des vorgeschlagenen Getriebes 4, wobei ein stark vereinfachter Querschnitt längs durch das Getriebe 4 dargestellt ist.

Das Getriebe 4 weist eine Welle 5 auf, welche mittels eines Gleitlagers 1 in dem Getriebe 4 drehbar gelagert ist. Die Welle 5 kann bspw. die Eingangswelle des Getriebes 4 sein. Weiterhin weist das Getriebe 4 eine weitere Welle 5' auf, welche mittels eines weiteren Gleitlagers 1' in dem Getriebe 4 drehbar gelagert ist. Die weitere Welle 5' kann bspw. die Ausgangswelle des Getriebes 4 sein, die über ein oder mehrere Getriebestufen, insbesondere Planetenstufen, mit der Eingangswelle wirkverbunden ist. In Figur 3 sind dabei die Zahnräder und Getriebestufen des Getriebes 4 nicht näher dargestellt.

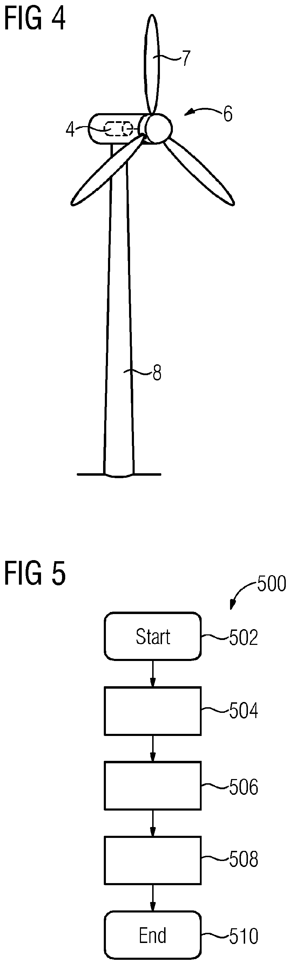

Die Figur 4 zeigt ein Ausführungsbeispiel der vorgeschlagenen Windkraftanlage 6. Die Windkraftanlage 6 weist einen Turm 8 auf, auf welchem eine Gondel mit einem Getriebe 4 drehbar gelagert ist. Das Getriebe 4 bzw. ihre Eingangswelle ist drehfest mit einem Propeller aufweisend drei Propellerblätter 7 verbunden. Die Windkraftanlage 6 weist zur Stromerzeugung üblicherweise weiterhin einen nicht näher dargestellten elektrischen Generator auf, der drehfest mit der Ausgangswelle des Getriebes 4 verbunden ist.

Figur 5 zeigt ein Ablaufdiagramm 500 eines Ausführungsbeispiels des vorgeschlagenen Verfahrens zur Herstellung des vorgeschlagenen Gleitlagers. Der Ablauf startet mit Schritt 502 und umfasst zumindest die folgenden Schritte. Bei Schritt 504 wird ein kupferhaltiger Werkstoff, insbesondere Zinnbronze CuSn12Ni2, bereitgestellt. Bei Schritt 506 wird ein Festschmierstoff bereitgestellt. Bei Schritt 508 wird das Gleitlager aufweisend den kupferhaltigen Werkstoff und den Festschmierstoff derart ausgeformt, dass das Gleitlager zumindest an seiner Lauffläche den Festschmierstoff aufweist. Der Ablauf endet mit Schritt 510.

Bei vorteilhaften Ausgestaltungen des Verfahrens kann das Ablaufdiagramm noch weitere Schritte umfassen, die weiter oben erläutert werden.

## Patentansprüche

1. Gleitlager (1), insbesondere für ein Getriebe (4) einer Windkraftanlage (6), wobei das Gleitlager (1) einen kupferhaltigen Werkstoff, insbesondere Zinnbronze CuSn₁₂Ni₂, aufweist,
**dadurch gekennzeichnet, dass**
das Gleitlager (1) zumindest an seiner Lauffläche (2) einen Festschmierstoff aufweist.

2. Gleitlager (1) nach Anspruch 1,
wobei der Festschmierstoff an einem Großteil der Lauffläche (2) des Gleitlagers (1) angeordnet ist.

3. Gleitlager (1) nach einem der vorherigen Ansprüche,
wobei der Festschmierstoff überwiegend an den Korngrenzen des metallischen Gefüges des Gleitlagers (1) bzw. einer Lagerbuchse (3) des Gleitlagers (1) angeordnet ist.

4. Gleitlager (1) nach einem der vorherigen Ansprüche,
wobei der Festschmierstoff mittels Beschichtung, insb. mittels Auftragsschweißens, zumindest an der Lauffläche (2) des Gleitlagers angebracht ist.

5. Gleitlager (1) nach einem der vorherigen Ansprüche,
wobei das Gleitlager (1) und/oder eine Lagerbuchse (3) des Gleitlagers (1) mittels Gusses hergestellt ist und der Festschmierstoff der Schmelze zugegeben ist.

6. Gleitlager (1) nach einem der vorherigen Ansprüche,
wobei das Gleitlager (1) und/oder eine Lagerbuchse (3) des Gleitlagers (1) einen Nickelgehalt von 0,5% bis 5% und/oder einen Zinngehalt von 8% bis 14% aufweist.

7. Gleitlager (1) nach einem der vorherigen Ansprüche,
wobei der Festschmierstoff Grafit, Molybdän, Wolframdisulfid, Gleitlack, eine Keramik, hexagonales Bornitrid (hBN), Polytetrafluorethylen (PTFE), Polyamid (PA), Polyoxymethylen (POM) und/oder Polyetheretherketone (PEEK) aufweist.

8. Gleitlager (1) nach Anspruch 7,
wobei der Festschmierstoff eine Keramik aufweist, die während der Herstellung des Gleitlagers (1) bzw. einer Lagerbuchse (3) des Gleitlagers (1) als Keramikpulver verarbeitet wurde.

9. Gleitlager (1) nach einem der vorherigen Ansprüche,
wobei der Festschmierstoff kein Blei aufweist.

10. Getriebe (4) für eine Windkraftanlage (6) aufweisend
- zumindest eine zu lagernde Welle (5) und
- zumindest ein Gleitlager (1) nach einem der vorhergehenden Ansprüche zur Lagerung der jeweiligen Welle (5).

11. Windkraftanlage (6) aufweisend zumindest ein Gleitlager (1) nach einem der Ansprüche 1 bis 9 und/oder ein Getriebe (4) nach Anspruch 10.

12. Verfahren zur Herstellung eines Gleitlagers (1) nach einem der Ansprüche 1 bis 9 umfassend die Verfahrensschritte:
- Bereitstellen eines kupferhaltigen Werkstoffs, insbesondere Zinnbronze CuSn₁₂Ni₂,
- Bereitstellen eines Festschmierstoffs und
- Ausformen des Gleitlagers (1) aufweisend den kupferhaltigen Werkstoff und den Festschmierstoff derart, dass das Gleitlager (1) zumindest an seiner Lauffläche (2) den Festschmierstoff aufweist.

13. Verfahren nach Anspruch 12,
wobei der Festschmierstoff eine Keramik aufweist, die während der Herstellung des Gleitlagers (1) bzw. einer Lagerbuchse (3) des Gleitlagers (1) als Keramikpulver verarbeitet wird.

14. Verfahren nach Anspruch 12 oder 13,
wobei der Festschmierstoff mittels Beschichtung, insb. mittels Auftragsschweißens, zumindest an der Lauffläche (2) des Gleitlagers (1) angebracht wird.

15. Verfahren nach einem der Ansprüche 12 bis 14,
wobei das Gleitlager (1) und/oder bzw. eine Lagerbuchse (3) des Gleitlagers (1) mittels Gusses hergestellt wird und der Festschmierstoff, insb. umfassend ein Keramikpulver, der Schmelze zugegeben wird.
